# EUROPÄISCHE PATENTSCHRIFT

(11) **EP 2 818 397 B1**
(45) Veröffentlichungstag und Bekanntmachung des Hinweises auf die Patenterteilung: **03.06.2020**
(21) Anmeldenummer: 14001790.6
(22) Anmeldetag: 21.05.2014
(51) Int. Cl.: B63B 21/56

(54) **Schiffskupplung zur Verbindung zweier Schiffskörper**
Ship coupling for connecting two ship bodies
Accouplement pour liaison entre deux éléments de bateau

(30) Priorität: 22.05.2013 DE 102013008596; 22.05.2013 DE 202013005213 U
(43) Veröffentlichungstag der Anmeldung: 31.12.2014
(73) Patentinhaber: Heinrich Harbisch Schiffswerft GmbH, 47053 Duisburg (DE)
(72) Erfinder: Denecke, Karl-Heinz, 47228 Duisburg (DE); Broß, Helmut, 47053 Duisburg (DE)
(74) Vertreter: Demski, Siegfried

(56) Entgegenhaltungen:
- DE-A1- 2 637 253
- DE-A1- 3 123 709
- DE-A1- 10 259 532
- JP-A- S51 141 192
- US-A- 3 990 386

## Beschreibung

Schiffskupplung zur Verbindung zweier Schiffskörper, insbesondere eines schiebenden Fahrzeuges, beispielsweise eines Schubbootes, und eines geschobenen Fahrzeuges, beispielsweise eines Leichters, umfassend eine Kupplungsstange mit einem Kupplungselement und einen Hydraulikzylinder mit einer Kolbenstange, welche Zug- und Druckkräfte aufnimmt und in dem Hydraulikzylinder geführt ist, wobei die Kolbenstange und die Kupplungsstange miteinander verbunden sind.

Die Erfindung betrifft dabei insbesondere eine Schiffskupplung zur Zusammenstellung eines Verbandes bestehend aus einem oder mehreren schiebenden Fahrzeugen und einem oder mehreren geschobenen Fahrzeugen, wobei die erfindungsgemäße Schiffskupplung sowohl zur Verbindung zweier schiebender Fahrzeuge als auch zur Verbindung zweier geschobener Fahrzeuge als auch zur Verbindung eines schiebenden Fahrzeuges und eines geschobenen Fahrzeuges vorgesehen ist. Mittels der erfindungsgemäßen Schiffskupplung können daher Schiffsverbände aus einem oder mehreren schiebenden Fahrzeugen und/oder einem oder mehreren geschobenen Fahrzeugen gebildet werden.

Zum Transport großer Lasten auf dem Wasser werden insbesondere in der Binnenschifffahrt, aber auch in küstennahen Fahrgebieten, Schiffsverbände gebildet, die mehrere Schiffskörper umfassen. Bei zumindest einem der Schiffskörper eines solchen Schiffsverbandes handelt es sich um ein schiebendes Fahrzeug, beispielsweise um ein Schubboot oder einen Schlepper, und bei den übrigen Schiffskörpern um geschobene Fahrzeuge, beispielsweise sogenannte Leichter. Bei Leichtern handelt es sich um Schiffskörper ohne eigenen Hauptantrieb. Die Schiffskörper können durch Taue oder Drahtseile miteinander verbunden sein. Die Steuerung eines solchen Schiffsverbandes ist jedoch schwierig, wenn die geschobenen Fahrzeuge nicht mit Hilfsantrieben und Ruderwerken ausgestattet sind, sodass es leicht zu einem seitlichen Wegdriften der Leichter kommen kann. Darüber hinaus bewegen sich die Schiffskörper aufgrund der Wellenbewegung in allen sechs Freiheitsgraden gegeneinander. Bei den sechs Freiheitsgraden handelt es sich bekanntlich um drei Translations- und drei Rotationsfreiheitsgrade. Wird ein Schlepper zum Antrieb eines Schiffsverbandes verwendet, zieht dieser die Leichter hinter sich her. Bei Verwendung eines Schubbootes zum Antrieb eines Schiffsverbandes schiebt das Schubboot die Leichter vor sich her, sodass die Schubkraft von dem Rumpf des Schubbootes auf die Rümpfe der Leichter übertragen wird. Zur Übertragung der Schubkraft und der Kräfte, resultierend aus dem Manövriervermögen des Schubbootes auf einen Leichter werden Schiffskupplungen verwendet. Bei einem Verband mit zwei oder mehr Leichtern muss die Schubkraft zusätzlich von einem Leichter auf den anderen mittels einer Kupplung übertragen werden. Eine solche Kupplung muss die Kräfte auf den angrenzenden Schiffskörper übertragen, trotz der durch die Wellenbewegung verursachten unterschiedlichen Relativbewegungen der Schiffskörper gegeneinander in den sechs Freiheitsgraden. So kommt es bei einer Kurvenfahrt des Schiffsverbandes oder bei einem seitlichen Abdriften eines Schiffskörpers des Verbandes zu einer Neigung der Schiffskörper gegeneinander in einer horizontalen Ebene. Die Kupplung zwischen den Schiffskörpern muss darum auch eine solche Neigung der Schiffskörper gegeneinander zulassen.

Aus dem Stand der Technik sind Schiffskupplungen bekannt, welche einen oder mehrere Hydraulikzylinder aufweisen. So ist aus der US 3 882 813 A eine Schiffskupplung bekannt, welche einen an einem Schiffskörper drehbar gelagerten Träger aufweist, an dem zwei Hydraulikzylinder einenends befestigt sind. Die Hydraulikzylinder sind anderenends an den beiden Schenkeln eines Greifarmes angeordnet, sodass sich die Schenkel bei Betätigung der Hydraulikzylinder einander annähern, um in Eingriff mit einem korrespondierenden Kupplungselement, welches mit einem angrenzenden Schiffskörper verbunden ist, zu gelangen, oder sich von dem korrespondierenden Kupplungselement zu lösen. Aus der US 3 882 813 A ist weiterhin eine Schiffskupplung bekannt, welche einen Schwenkarm aufweist, an dem ein starres Kupplungselement befestigt ist und der um seinen Mittelpunkt in einer horizontalen Ebene drehbar auf dem Deck eines Schiffskörpers gelagert ist. An den äußeren Enden des Schwenkarmes ist die Kolbenstange jeweils eines Hydraulikzylinders befestigt, wobei die Gehäuse der beiden Hydraulikzylinder mit dem Schiffskörper verbunden sind. Das starre Kupplungselement weist an seinem dem Schwenkarm abgewandten Ende Kupplungsmittel auf, welche mit einem benachbarten Schiffskörper oder einem mit einem Schiffskörper verbundenen zwischengelagerten Kupplungskörper in Eingriff gelangen.

Aus der DE 26 37 253 ist eine Schiffskupplung bekannt, welche einen hydraulischen Zylinder mit einem fest mit einem Schiffskörper verbundenen Gehäuse und eine in dem Gehäuse dreh- und verschiebbar gelagerte Kolbenstange aufweist. Einenends weist die Kolbenstange einen Kolben, welcher in dem Gehäuse gelagert ist, und anderends ein trichterförmiges Kupplungselement auf. In den links- und rechtsseitig des Kolbens gelegenen Teilräumen des Gehäuses, welche durch den Kolben fluiddicht voneinander abgetrennt sind, befindet sich jeweils ein Fluid und jeweils eine Spiralfeder. Die beiden Spiralfedern sind unter Zusammendrücken in den jeweiligen Teilräumen des Gehäuses angeordnet und bewirken eine Dämpfung der Bewegung der Kolbenstange. Das Kupplungselement der Kolbenstange wird mit einem korrespondierenden Kupplungselement eines benachbarten Schiffskörpers verbunden. Sowohl die Fluide als auch die Spiralfedern in den beiden Teilräumen des Gehäuses bewirken eine Dämpfung der horizontalen Bewegungen der Kolbenstange. Die trichterförmige Ausbildung des Kupplungselementes der Kolbenstange ermöglicht eine vertikale Bewegung der beiden durch die Schiffskupplung miteinander verbundenen Schiffskörper.

Aus der DE 102 59 532 A1 ist ein Stützlager für Kraftfahrzeuge bekannt, welches ein Gehäuse aus einem elastischen Material aufweist. Das Gehäuse ist mit einem Hydraulikzylinder fest verbunden und ist mit dem Hydraulikmedium des Hydraulikzylinders hydraulisch gekoppelt. Bei einer Bewegung des in dem Hydraulikzylinder angeordneten Kolbens nimmt das Stützlager einen Teil der über das Hydraulikmedium übertragenen Kraft auf, wobei die Rückstellkraft des Stützlagers insbesondere größer ist als die Reibungskraft des Kolbens in dem Hydraulikzylinder. Durch diese Ausgestaltung eines Stützlagers kann der Fahrkomfort eines Fahrzeuges erhöht werden.

Die US 3,990,386 A offenbart ein Kabelsystem zur Verbindung zweier Schiffskörper, insbesondere eines Schiffes mit einer Sonarboje. Das Kabelsystem umfasst ein Kabel, welches eine Vielzahl von Seilen und ggf. elektrische Kabel aufweist. Ferner weist das Kabelsystem einen Befestigungsmechanismus auf, an welchem die Enden der Seile befestigt sind. Die Seile des Kabels sind in dem Befestigungsmechanismus jeweils an der Kolbenstange eines ersten Hydraulikzylinders befestigt. Das Gehäuse jedes dieser ersten Hydraulikzylinder ist über einen Rahmen jeweils mit der Kolbenstange eines weiteren Hydraulikzylinders verbunden. Die Fluid aufnehmenden Kammern der ersten und weiteren Hydraulikzylinder stehen über ein Leitungssystem miteinander in Verbindung, wodurch erreicht wird, dass eine auf ein Seil des Kabels wirkende Last auf die übrigen Seile des Kabels übertragen wird, um somit die Last auf die Seile des Kabels zu verteilen.

Aus der Patentanmeldung DE 31 23 709 A1, die als nächstliegender Stand der Technik angesehen wird, ist eine axial gefederte Kupplungsstange für aneinander liegende Schubschiffseinheiten bekannt. Die Kupplungsstange ist einenends mit der Kolbenstange eines hydraulischen Zylinders verbunden und weist anderenends einen Kupplungsbolzen auf. Die Kupplungsstange ist mit der Kolbenstange des hydraulischen Zylinders im Bereich eines beweglich gelagerten Führungsschlittens verbunden. Der Führungsschlitten bewegt sich bei einwirkenden Zug- und Stoßkräften auf einer Gleitbahn. In dem Führungsschlitten sind zwischen zwei beweglichen Lagerplatten vorgespannte Pufferfedern angeordnet. Eine auf die Kupplungsstange wirkende Zug- oder Stoßkraft wird über eine der in dem Führungsschlit ten angeordneten Lagerplatten auf die Pufferfedern übertragen. Die Pufferfedern dieser Schiffskupplung tragen zur Dämpfung sowohl von Zug- als auch von Stoßkräften bei, sobald diese größer sind als die Vorspannung der Pufferfedern, sodass Lastspitzen durch die Pufferfedern gedämpft werden.

Aus der DE 102 59 532 A1 ist ein Stützlager für Kraftfahrzeuge bekannt, welches mit einem Hydraulikzylinder zusammenwirkt. Das in dieser Druckschrift offenbarte Stützlager weist ein Gehäuse aus einem elastischen Material auf und ist mit dem Innenraum eines Hydraulikzylinders über eine hydraulische Wirkfläche verbunden, sodass das Hydraulikmedium bei einer Bewegung des Kolbens in Richtung des Stützlagers in dasselbe gedrückt wird und das elastische Gehäuse des Stützlagers zu einer Dämpfung der Kolbenbewegung beiträgt, wobei insbesondere die Rückstellkraft des Stützlagers größer ist als die Reibungskraft des Kolbens in dem Hydraulikzylinder. Durch diese Maßnahme wird gemäß dieser Druckschrift der Fahrkomfort eines mit entsprechenden Stützlagern ausgestatteten Kraftfahrzeuges erhöht.

Aufgabe der Erfindung ist es, eine Schiffskupplung mit Dämpfungswirkung zu schaffen, welche über zusätzliche Dämpfungsmittel zur Dämpfung von Lastspitzen verfügt.

Zur Lösung der Aufgabe wird eine Schiffskupplung vorgeschlagen, deren Hydraulikzylinder axial beweglich in einem unbeweglich mit einem Schiffskörper verbundenen Gehäuse gelagert ist, in welchem ein vorgespanntes elastisches Element angeordnet ist, dass den Hydraulikzylinder in seiner Axialrichtung gegen das Gehäuse drückt, sodass die Rückstellkraft des vorgespannten elastischen Elementes bewirkt, dass der Hydraulikzylinder bei Normallast ortsfest in dem Gehäuse gehalten wird und nur bei Lastspitzen, die größer sind als die Rückstellkraft des vorgespannten elastischen Elementes nimmt dieses einen Teil der Last auf. Weitere vorteilhafte Ausgestaltungen der Erfindung ergeben sich aus den Unteransprüchen.

Bei der erfindungsgemäßen Schiffskupplung werden zwei Dämpfungsglieder miteinander in vorteilhafter Weise kombiniert. Das vorgespannte elastische Element hält den Hydraulikzylinder innerhalb des Gehäuses bei Normallast in einer festen Position, sodass die Relativbewegung zwischen dem Schiffskörper, mit dem das Gehäuse der erfindungsgemäßen Schiffskupplung verbunden ist, und dem benachbarten Schiffskörper nur durch die Bewegung des Kolbens des Hydraulikzylinders und der mit ihm verbundenen Kolbenstange gedämpft wird. Bei Lastspitzen zwischen beiden Schiffskörpern, welche größer sind als die Rückstellkraft des vorgespannten elastischen Elementes, erfolgt die Dämpfung zusätzlich durch das elastische Element. Durch diese Ausbildung der erfindungsgemäßen Schiffskupplung kann ein Hydraulikzylinder zum Ankuppeln zweier Schiffskörper verwendet werden, ohne dass die Gefahr besteht, dass dieser bei Lastspitzen zerstört wird, was zu einem Verlust der Dämpfungsfähigkeit der Schiffskupplung durch Entweichen des in dem Hydraulikzylinders befindlichen Fluids oder zu einem Abtrennen der beiden Schiffskörper voneinander führen kann. Die mechanische Ankupplung beider Schiffskörper erfolgt durch die erfindungsgemäße Schiffskupplung mittels einer Kupplungsstange, welche einenends ein Kupplungselement aufweist und anderenends drehbar mit der Kolbenstange des Hydraulikzylinders verbunden ist. Das Kupplungselement weist eine Erstreckungsrichtung senkrecht zu der Erstreckungsrichtung der Kupplungsstange auf, wobei die Einkupplung beziehungsweise Entkupplung eines benachbarten Schiffskörpers durch Drehung der Kupplungsstange um jeweils 90 Grad erfolgt. Der benachbarte Schiffskörper weist zur Aufnahme des Kupplungselementes ein Aufnahmeelement auf, welches im Wesentlichen aus einer vertikal orientierten Platte mit einer sich vertikal erstreckenden Ausnehmung besteht. Bei vertikaler Orientierung des Kupplungselementes kann dieses durch die Ausnehmung der Platte geschoben und sodann über Drehung der Kupplungsstange um 90 Grad verdreht werden, sodass eine rückwärtige Bewegung des Kupplungselementes durch die Ausnehmung der Platte des Aufnahmeelementes verhindert wird. Die sich vertikal erstreckende Ausnehmung erlaubt darüber hinaus eine vertikale Relativbewegung der Kupplungsstange einerseits und des Aufnahmeelementes andererseits und folglich eine vertikale Relativbewegung der beiden benachbarten Schiffskörper zueinander.

Die erfindungsgemäße Kupplung ermöglicht eine tiefgangsunabhängige Verbindung der schiebenen und geschobenen Fahrzeuge untereinander, wobei die horizontalen Kupplungsebenen zwischen den schiebenen und geschobenen Fahrzeugen zueinander variabel sind.

Um Spannungen auf das Gehäuse bei einer Relativbewegung der beiden gekoppelten Schiffskörper zu vermeiden, ist in Ausgestaltung der Erfindung vorgesehen, dass das Gehäuse um eine horizontale Achse schwenkbeweglich gelagert ist. Eine solche Lagerung wird beispielsweise dadurch erreicht, dass das Gehäuse zwei seitliche, einstückig angeformte Lagerbolzen aufweist, die jeweils in einem Lager aufgenommen sind, wobei die Lager unbeweglich mit einem Schiffskörper verbunden sind.

In weiterer Ausgestaltung der erfindungsgemäßen Schiffskupplung kann vorgesehen sein, dass das elastische Element den Hydraulikzylinder in die von der Kupplungsstange abgewandte Richtung drückt. Durch diese Orientierung der Rückstellkraft des vorgespannten elastischen Elementes können Zuglastspitzen durch das elastische Element gedämpft werden, also ungewöhnlich große Kräfte, die auf ein Entfernen der beiden Schiffskörper voneinander hinwirken. Natürlich kann auch vorgesehen sein, dass das elastische Element den Hydraulikzylinder in die der Kupplungsstange zugewandte Richtung drückt, wodurch die Rückstellkraft des vorgespanten elastischen Elementes in Richtung der Kupplungsstange orientiert ist. In dieser Ausgestaltung können Schublastspitzen, also ungewöhnlich große Kräfte, die auf eine Annäherung der beiden Schiffskörper hinwirken, durch das elastische Element gedämpft werden.

Bevorzugt ist, dass das elastische Element durch eine Kraft von 5·10⁵ N oder mehr vorgespannt ist. Dies bedeutet, dass das elastische Element nur Kräfte von 5·10⁵ N oder mehr zwischen den benachbarten Schiffskörpern dämpft. Selbstverständlich kann das elastische Element auch mit einer anderen Kraft aufgespannt werden, also eine andere Rückstellkraft aufweisen. Dies hängt von dem jeweiligen Anwendungsfall, also dem zu erwartenden Seegang, der Schubkraft des Schubbootes beziehungsweise des Schleppers und der Masse der zu verbindenden Schiffskörper, ab. Eine Kraft von 5·10⁵ N entspricht der Gewichtskraft einer Masse von 50,97 Tonnen.

Die erfindungsgemäße Schiffskupplung kann derart ausgestaltet werden, dass die Kolbenstange und die Kupplungsstange durch ein Verbindungselement miteinander verbunden sind, welches fest mit der Kolbenstange verbunden ist und einen Flanschkragen der Kupplungsstange umgreift, sodass die Kupplungsstange drehbar von dem Verbindungselement aufgenommen ist. Der Flanschkragen der Kupplungsstange kann dabei endseitig oder an anderer Stelle an der Kupplungsstange angeordnet sein. Diese Ausbildung der Schiffskupplung bewirkt, dass die zum Einkuppeln des Kupplungselementes in das Aufnahmeelement des benachbarten Schiffskörpers nötige Drehung der Kupplungsstange allein von dieser ausgeführt wird, wohingegen die Kolbenstange keine Drehung ausführt. Dazu ist das Verbindungselement fest mit der Kolbenstange verbunden und umgreift einen Flanschkragen der Kupplungsstange, sodass letztere durch das Verbindungselement zwar unlösbar mit der Kolbenstange verbunden ist, jedoch Drehungen ausführen kann.

Weiterhin kann die Kupplungsstange vorteilhaft in zumindest einem ersten Lager gelagert sein, welches Bewegungen der Kupplungsstange in nicht-axialer Richtung verhindert und dabei Kräfte, die in nicht-axialer Richtung auf die Kupplungsstange wirken, aufnimmt. Das erste Lager bewirkt, dass die Kupplungsstange und dadurch auch die Kolbenstange, Bewegungen ausschließlich in axialer Richtung ausführen, was insbesondere verhindert, dass der Hydraulikzylinder beschädigt wird. Das erste Lager kann zumindest an der der Kupplungsstange zugewandten Oberfläche aus Bronze oder vollständig aus Bronze bestehen. Ferner kann auch das Gehäuse der erfindungsgemäßen Schiffskupplung über zumindest ein zweites Lager mit dem Schiffskörper verbunden sein. Dieses zweite Lager nimmt die über die Kupplungsstange und die Kolbenstange auf das Gehäuse übertragenen Kräfte auf. Auch das zweite Lager kann zumindest an der dem Gehäuse zugewandten Oberfläche oder vollständig aus Bronze bestehen.

In weiterer Ausgestaltung der erfindungsgemäßen Schiffskupplung kann vorgesehen sein, dass diese eine Stoßdämpfungsvorrichtung umfasst, welche einen Grundkörper, wenigstens ein Kontaktelement mit einer einem benachbarten Schiffskörper zugewandten Kontaktfläche und wenigstens ein nichtmetallisches Dämpfungselement umfasst, wobei das Dämpfungselement zwischen dem Grundkörper und dem Kontaktelement angeordnet ist, und der Grundkörper fest mit einem Schiffskörper verbunden ist. Entgegen der aus dem Stand der Technik bekannten Stoßdämpfungsvorrichtungen für Schiffskupplungen besteht die Stoßdämpfungsvorrichtung gemäß dieser Weiterbildung der erfindungsgemäßen Schiffskupplung nicht ausschließlich aus einem Metall, sondern weist ein nichtmetallisches Dämpfungselement auf. Das nichtmetallische Dämpfungselement bewirkt im Wesentlichen eine Dämpfung der Geräuschentwicklung bei Aufeinanderstoßen des Kontaktelementes der Stoßdämpfungsvorrichtung mit einem benachbarten Schiffskörper, insbesondere dem Aufnahmeelement eines benachbarten Schiffskörpers für ein Kupplungselement einer Schiffskupplung. Das Dämpfungselement kann aus einem elastischen Material, wie Gummi oder einem elastischen Kunststoff, oder aus einem anderen nichtmetallischen Material, wie einem nichtelastischen Kunststoff bestehen. Das Kontaktelement und/oder der Grundkörper können dagegen aus einem Metall bestehen, sodass das Dämpfungselement auch bei großen Kraftüberträgen infolge von Stoßvorgängen nicht verformt oder beschädigt wird.

Weiterhin kann die erfindungsgemäße Schiffskupplung dahingehend ausgestaltet werden, dass das Kontaktelement über einen axial geführten Bolzen mit dem Grundkörper derart verbunden ist, dass das Kontaktelement relativ zu dem Grundkörper beweglich ist. In dieser Ausgestaltung ist der Grundkörper ein starres Gebilde, welcher fest mit einem Schiffskörper verbunden ist und mit dem das Kontaktelement über einen axial geführten Bolzen beweglich verbunden ist. Durch die axiale Beweglichkeit des Kontaktelementes kann das Dämpfungselement bei Stoßeinwirkung komprimiert werden und anschließend seine ursprüngliche Form wieder annehmen. Das Dämpfungselement kann einseitig entweder mit einer Stirnfläche des Grundkörpers oder mit einer der Kontaktfläche abgewandten Fläche des Kontaktelementes verbunden, beispielsweise verklebt, sein. In besonderer Ausgestaltung des Kontaktelementes ist dieses im Querschnitt U-förmig, wobei in der Vertiefung der U-Form das Dämpfungselement angeordnet ist. Die Schenkel der U-Form können sich dabei so weit in Richtung des Grundkörpers erstrecken, dass die Stirnfläche des Grundkörpers, mit welcher das Dämpfungselement in Kontakt gerät, von den Schenkeln eingefasst ist. Der axial geführte Bolzen kann einenends fest mit dem Kontaktelement verbunden und in einem Durchbruch des Grundkörpers gelagert sein und anderenends einen Bolzenkopf aufweisen, dessen Querschnittsfläche größer ist, als die Querschnittsfläche des Durchbruches. Dabei bewirkt die Ausbildung des Bolzenkopfes mit einer Querschnittsfläche, die größer ist als die Querschnittsfläche des Durchbruches in dem Grundkörper, dass sich der Bolzen nicht von dem Grundkörper lösen kann und sich das Kontaktelement dadurch in axialer Richtung bewegen kann, ohne jemals vollständig von dem Grundkörper gelöst zu werden.

Der Grundkörper der Stoßdämpfungsvorrichtung der erfindungsgemäßen Schiffskupplung kann so ausgestaltet sein, dass er eine Öffnung aufweist, in welcher die Kupplungsstange der Schiffskupplung geführt ist. In dieser Ausgestaltung ist der Grundkörper der Stoßdämpfungsvorrichtung um die Kupplungsstange herum angeordnet, sodass der Grundkörper nicht nur die Funktion der Stoßaufnahme, sondern auch der Führung der Kupplungsstange erfüllt. Bei dieser Ausgestaltung der Stoßdämpfungsvorrichtung ist sichergestellt, dass es nur im Bereich der Kupplungsverbindung, welche zumeist zentral an dem Bug oder Heck eines Schiffskörpers angeordnet ist, zu einem Berührungskontakt benachbarter Schiffskörper kommt, wodurch eine Berührung der Schiffskörper abseits der Kupplungsverbindung verhindert wird.

In weiterer Ausgestaltung der Stoßdämpfungsvorrichtung der Schiffskupplung, welche einen Grundkörper mit einer Öffnung aufweist, in der die Kupplungsstange geführt ist, kann vorgesehen sein, dass das erste Lager zur axialen Führung der Kupplungsstange in der Öffnung des Grundkörpers angeordnet ist. Dadurch wird vorteilhafterweise erreicht, dass keine zusätzliche Halterung für das erste Lager an dem Schiffskörper befestigt werden muss.

Unter axialer Richtung oder Axialrichtung wird im Kontext dieser Anmeldung stets eine bezüglich der Schiffskupplung zentral gelegene sich in die Haupterstreckungsrichtung der Schiffskupplung erstreckende Achse bezeichnet.

Die Erfindung wird im Weiteren anhand der Figuren näher erläutert.

Es zeigt
- Fig. 1: eine horizontale Querschnittsansicht einer Ausführungsform einer erfindungsgemäßen Schiffskupplung in einem eingekuppelten Zustand und
- Fig. 2: eine horizontale Querschnittsansicht der Ausführungsform der erfindungsgemäßen Schiffskupplung in einem ausgekuppelten Zustand.

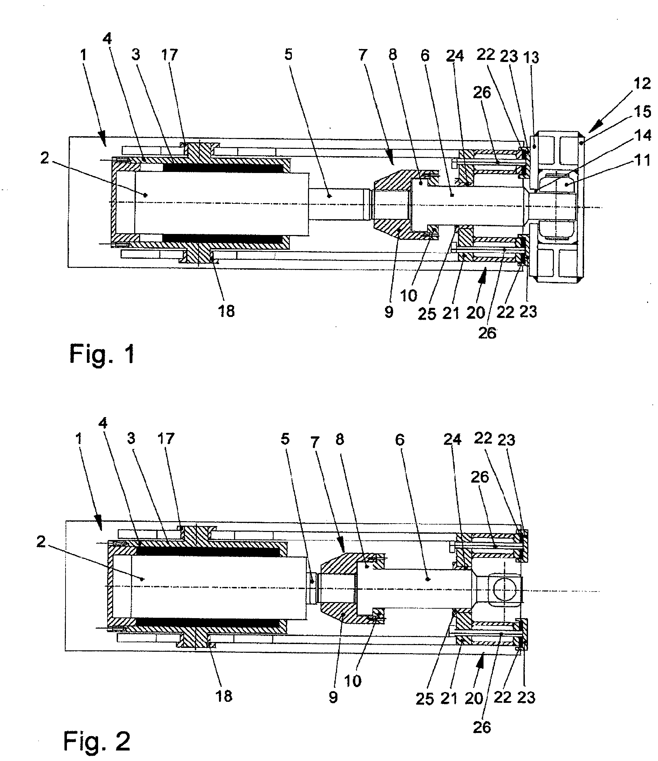

Figur 1 zeigt eine Ausführungsform der erfindungsgemäßen Schiffskupplung 1. Die Schiffskupplung 1 weist einen Hydraulikzylinder 2 mit einer Kolbenstange 5, eine Kupplungsstange 6 mit einem Kupplungselement 11 und ein Gehäuse 4 sowie ein elastisches Element 3 auf. Der Hydraulikzylinder 2 ist in dem Gehäuse 4 angeordnet und wird von dem vorgespannten elastischen Element 3 in axialer Richtung gegen das Gehäuse 4 gedrückt, wobei das vorgespannte elastische Element 3 zwischen dem Hydraulikzylinder 2 und dem Gehäuse 4 derart angeordnet ist, dass es den Hydraulikzylinder in der von der Kupplungsstange 6 abgewandten Richtung gegen das Gehäuse 4 drückt. Die Rückstellkraft des vorgespannten elastischen Elementes 3 bewirkt, dass der Hydraulikzylinder 2 bei Normallast ortsfest in dem Gehäuse 4 gehalten wird. Nur bei Lastspitzen, die größer sind als die Rückstellkraft des vorgespannten elastischen Elementes 3, nimmt dieses einen Teil der Last auf. Die erfindungsgemäße Schiffskupplung 1 vermag daher Zug- und Schublasten zwischen dem Schiffskörper, auf welchem die Schiffsküpplung 1 angeordnet ist, und einem benachbarten Schiffskörper, durch die Bewegung des mit der Kolbenstange 5 verbundenen Kolbens des Hydraulikzylinders 2 zu dämpfen. Zuglasten zwischen den benachbarten Schiffskörpern, die größer sind als die Rückstellkraft des vorgespannten elastischen Elementes 3, werden zusätzlich durch das elastische Element 3 gedämpft. Dadurch wird verhindert, dass besonders große Lasten allein von dem Hydraulikzylinder 2 aufgenommen werden, sodass eine Beschädigung des Hydraulikzylinders 2 verhindert wird. In dieser Ausführungsform ist das elastische Element mit einer Kraft von 5,89·10⁵ N vorgespannt, die der Gewichtskraft einer Masse von 60 t entspricht.

Die Kolbenstange 5 des Hydraulikzylinders 2 ist über ein Verbindungselement 7 mit der Kupplungsstange 6 verbunden, wobei das Verbindungselement 7 fest mit der Kolbenstange 5 verbunden ist und die Kupplungsstange 6 derart umgreift, dass diese bezüglich der Kolbenstange 5 drehbar ist. Das Verbindungselement 7 umfasst ein erstes mit der Kolbenstange 5 fest verbundenes Teilstück 9 und einen mit dem ersten Teilstück 9 befestigten Flansch 10. Zwischen dem ersten Teilstück 9 des Verbindungselementes 7 und dem Flansch 10 ist ein endseitiger Flanschkragen 8 der Kupplungsstange 6 angeordnet, sodass die Kupplungsstange 6 drehbar von dem Verbindungselement 7 aufgenommen ist, sich jedoch in axialer Richtung nicht von der Kolbenstange 5 entfernen kann. Das Verdrehen der Kupplungsstange 6 ist erforderlich, um das endseitig angeordnete Kupplungselement 11 mit dem Aufnahmeelement 12 in Eingriff zu bringen. Das Aufnahmeelement 12 ist fest an einem benachbarten Schiffskörper angeordnet und umfasst im Wesentlichen eine Platte 13 mit einer sich vertikal erstreckenden Ausnehmung 14 und einen Hauptkörper 15. Zur Einkupplung des Kupplungselementes 11 der Schiffskupplung 1 in das Aufnahmeelement 12 eines benachbarten Schiffskörpers wird die Kupplungsstange 6 derart gedreht, dass das Kupplungselement 11 parallel zu der Ausnehmung 14 der Platte 13 orientiert ist und sodann wird das Kupplungselement 11 durch die Ausnehmung 14 geführt. Anschließend wird die Kupplungsstange 6 um 90 Grad verdreht, sodass das Kupplungselement 11 senkrecht zur Erstreckungsrichtung der Ausnehmung 14 orientiert ist und sich somit in Eingriff befindet. Das Kupplungselement 11 kann sich nun entlang der Ausnehmung 14, also in vertikaler Richtung, bewegen, sodass die beiden aneinander gekuppelten Schiffskörper sich gegeneinander vertikal bewegen können, wie dies aufgrund von Wellenbewegungen der Fall ist. Dagegen können sich die beiden Schiffskörper in eingekuppeltem Zustand nicht mehr voneinander entfernen, da das Kupplungselement 11 der Kupplungsstange 6 gegen die Platte 13 des Aufnahmeelementes 12 stößt und sich bei der gegebenen Orientierung nicht aus dem Aufnahmeelement 12 lösen kann.

Das fest mit einem Schiffskörper verbundene Gehäuse 4 ist von zwei Lagern 17, 18 aufgenommen, welche auf das Gehäuse wirkende Kräfte aufnehmen. Die Lager 17, 18 können in einer oder mehr Halterungen angeordnet sein, welche zwar mit dem Schiffskörper fest verbunden sind, jedoch auf diesem versetzt werden können, zum Beispiel nach dem Lösen von Befestigungsschrauben oder Bolzen.

Die erfindungsgemäße Schiffskupplung 1 weist ferner eine Stoßdämpfungsvorrichtung 20 auf. Die Stoßdämpfungsvorrichtung 20 umfasst einen Grundkörper 21, mehrere Dämpfungselemente 22 und mehrere Kontaktelemente 23. Der Grundkörper 21 ist mit dem Schiffskörper fest verbunden, sodass er aufgrund von Stößen zwischen den benachbarten Schiffskörpern einwirkende Kräfte aufnehmen kann. Der Grundkörper 21 besteht aus einem Metall, wie zum Beispiel Stahl. Die Kontaktelemente 23 bestehen ebenfalls aus einem Metall, wie zum Beispiel Stahl, und weisen eine Kontaktfläche auf, welche bei Stößen zwischen den benachbarten Schiffskörpern in Berührungskontakt mit den benachbarten Schiffskörpern gerät. Zwischen dem Grundkörper 21 und den Kontaktelementen 23 ist jeweils ein Dämpfungselement 22 angeordnet, welches aus Gummi besteht und dazu dient, die sich bei Zusammenstößen zwischen den benachbarten Schiffskörpern ergebende Geräuschentwicklung zu dämpfen. Der Grundkörper 21 ist um die Kupplungsstange 6 herum angeordnet und weist eine Öffnung 24 auf, durch welche die Kupplungsstange 6 geführt ist. In der Öffnung 24 ist ein Lager 25 angeordnet, welches in nicht axialer Richtung auf die Kupplungsstange 6 wirkende Kräfte aufnimmt. Sowohl das Lager 25 als auch die Lager 17, 18 bestehen aus Bronze.

Die Kontaktelemente 23 sind über Bolzen 26 mit dem Grundkörper 21 verbunden, wobei die Bolzen 26 durch Durchbrüche in dem Grundkörper 21 geführt sind und jeweils einen Bolzenkopf aufweisen, dessen Querschnittsfläche größer ist als die Querschnittsfläche des jeweiligen Durchbruches in dem Grundkörper 21. Die Bolzen 26 sind mit den Kontaktelementen 23 verschweißt oder verschraubt. Die Bolzen 26 halten die Kontaktelemente 23 in vertikaler Richtung in Position und erlauben in axialer Richtung eine geringfügige Bewegung der Kontaktelemente 23, sodass die Kontaktelemente 23 bei einem Aneinanderstoßen benachbarter Schiffskörper die Stoßwirkung auf die Dämpfungselemente 22, welche dadurch komprimiert werden, übertragen können. Die Kontaktelemente 23 sind ferner im Querschnitt U-förmig ausgebildet, wobei die beiden Schenkel der U-Form die Stirnflächen des Grundkörpers 21 aufnehmen, sodass die Schenkel der U-Form der Kontaktelemente 23 als Führung für die Relativbewegung zwischen dem Grundkörper 21 und den Kontaktelementen 23 dienen.

Figur 2 zeigt die Schiffskupplung 1 aus Figur 1 in ausgekuppeltem Zustand. Für einen Entkupplungsvorgang wird das Kupplungselement 11 parallel zu der Ausnehmung 14 der Platte 13 orientiert, sodass sich das Kupplungselement 11 durch die Ausnehmung 14 in Richtung des Hydraulikzylinders 2 bewegen kann. Durch Einfahren der Kolbenstange 5 wird der Entkupplungsvorgang beendet. Entsprechend wird ein Einkupplungsvorgang durchgeführt, indem die Kolbenstange 5 herausgefahren wird, wobei sich das Kupplungselement 11 durch die Ausnehmung 14 der Platte 13 des Aufnahmeelementes 12 bewegt. Anschließend wird die Kupplungsstange 6 um 90 Grad verdreht, sodass das Kupplungselement 11 senkrecht zu der Erstreckungsrichtung der Ausnehmung 14 orientiert ist, wodurch der Einkupplungsvorgang abgeschlossen ist.

### Bezugszeichenliste

- 1: Schiffskupplung
- 2: Hydraulikzylinder
- 3: elastisches Element
- 4: Gehäuse
- 5: Kolbenstange
- 6: Kupplungsstange
- 7: Verbindungselement
- 8: Flanschkragen
- 9: Teilstück
- 10: Flansch
- 11: Kupplungselement
- 12: Aufnahmeelement
- 13: Platte
- 14: Ausnehmung
- 15: Hauptkörper
- 17: Lager
- 18: Lager
- 20: Stoßdämpfungsvorrichtung
- 21: Grundkörper
- 22: Dämpfungselemente
- 23: Kontaktelemente
- 24: Öffnung
- 25: Lager
- 26: Bolzen

## Patentansprüche

1. Schiffskupplung (1) zur Verbindung zweier Schiffskörper, insbesondere eines schiebenden Fahrzeuges und eines geschobenen Fahrzeuges, umfassend eine Kupplungsstange (6) mit einem Kupplungselement (11) und einen Hydraulikzylinder (2) mit einer Kolbenstange (5), die in dem Hydraulikzylinder (2) geführt ist, wobei die Kolbenstange (5) und die Kupplungsstange (6) miteinander verbunden sind,
**dadurch gekennzeichnet,**
**dass** der Hydraulikzylinder (2) axial beweglich in einem mit einem Schiffskörper verbundenen Gehäuse (4) gelagert ist, in welchem ein vorgespanntes elastisches Element (3) angeordnet ist, dass den Hydraulikzylinder (2) in seiner Axialrichtung gegen das Gehäuse (4) drückt, sodass die Rückstellkraft des vorgespannten elastischen Elementes (3) bewirkt, dass der Hydraulikzylinder (2) bei Normallast ortsfest in dem Gehäuse gehalten wird und nur bei Lastspitzen, die größer sind als die Rückstellkraft des vorgespannten elastischen Elementes (3) nimmt dieses einen Teil der Last auf.

2. Schiffskupplung (1) nach Anspruch 1,
**dadurch gekennzeichnet,**
**dass** das Gehäuse (4) um eine horizontale Achse schwenkbar gelagert ist.

3. Schiffskupplung (1) nach Anspruch 1 oder 2,
**dadurch gekennzeichnet,**
**dass** das elastische Element (3) den Hydraulikzylinder (2) in die von der Kupplungsstange (6) abgewandte Richtung oder in Richtung auf die Kupplungsstange (6) drückt.

4. Schiffskupplung (1) nach einem der Ansprüche 1, 2 oder 3,
**dadurch gekennzeichnet,**
**dass** das elastische Element (3) eine Kraft von 5·10⁵ N oder mehr auf den Hydraulikzylinder (2) ausübt.

5. Schiffskupplung (1) nach einem der Ansprüche 1 bis 4,
**dadurch gekennzeichnet,**
**dass** die Kolbenstange (5) und die Kupplungsstange (6) durch ein Verbindungselement (7) miteinander verbunden sind, welches fest mit der Kolbenstange (5) verbunden ist und einen Flanschkragen (8) der Kupplungsstange (6) umgreift, sodass die Kupplungsstange (6) drehbar von dem Verbindungselement (7) aufgenommen ist.

6. Schiffskupplung (1) nach einem der Ansprüche 1 bis 5,
**dadurch gekennzeichnet,**
**dass** die Kupplungsstange (6) in zumindest einem ersten Lager (25) gelagert ist, welches Bewegungen der Kupplungsstange (6) in nicht-axialer Richtung verhindert.

7. Schiffskupplung (1) nach Anspruch 6,
**dadurch gekennzeichnet,**
**dass** das erste Lager (25) zumindest an der der Kupplungsstange (6) zugewandten Oberfläche aus Bronze besteht, oder dass das erste Lager (25) vollständig aus Bronze besteht.

8. Schiffskupplung (1) nach einem der Ansprüche 1 bis 7,
**dadurch gekennzeichnet,**
**dass** das Gehäuse (4) über zumindest ein zweites Lager (17, 18) mit dem Schiffskörper verbunden ist.

9. Schiffskupplung (1) nach Anspruch 8,
**dadurch gekennzeichnet,**
**dass** das zweite Lager (17, 18) zumindest an der dem Gehäuse (4) zugewandten Oberfläche aus Bronze besteht, oder dass das zweite Lager (17, 18) vollständig aus Bronze besteht.

10. Schiffskupplung (1) nach einem der Ansprüche 1 bis 9,
**dadurch gekennzeichnet,**
**dass** die Schiffskupplung (1) eine Stoßdämpfungsvorrichtung (20) umfasst, welche einen Grundkörper (21), wenigstens ein Kontaktelement (23) mit einer einem benachbarten Schiffskörper zugewandten Kontaktfläche und wenigstens ein nichtmetallisches Dämpfungselement (22) umfasst, wobei das Dämpfungselement (22) zwischen dem Grundkörper (21) und dem Kontaktelement (23) angeordnet ist, und der Grundkörper (21) fest mit einem Schiffskörper verbunden ist.

11. Schiffskupplung (1) nach Anspruch 10,
**dadurch gekennzeichnet,**
**dass** das Dämpfungselement (22) aus einem elastischen Material besteht, und/oder dass das Dämpfungselement (22) aus Gummi oder einem Kunststoff besteht.

12. Schiffskupplung (1) nach einem oder mehreren der Ansprüche 10 bis 11, **dadurch gekennzeichnet,**
**dass** das Kontaktelement (23) und/oder der Grundkörper (21) aus einem Metall besteht.

13. Schiffskupplung (1) nach einem oder mehreren der Ansprüche 10 bis 12, **dadurch gekennzeichnet,**
**dass** das Kontaktelement (23) über einen axial geführten Bolzen (26) mit dem Grundkörper (21) derart verbunden ist, dass das Kontaktelement (23) relativ zu dem Grundkörper (21) beweglich ist.

14. Schiffskupplung (1) nach Anspruch 13,
**dadurch gekennzeichnet,**
**dass** der Bolzen (26) einenends mit dem Kontaktelement (23) fest verbunden ist und anderenends einen Bolzenkopf aufweist, wobei der Bolzen (26) in einem Durchbruch des Grundkörpers (21) gelagert ist, dessen Querschnittsfläche größer ist, als die Querschnittsfläche des Durchbruches.

15. Schiffskupplung (1) nach einem oder mehreren der Ansprüche 10 bis 14, **dadurch gekennzeichnet,**
**dass** der Grundkörper (21) eine Öffnung (26) aufweist, in welcher die Kupplungsstange (6) geführt ist, und/oder dass das erste Lager (25) in der Öffnung (24) des Grundkörpers (21) angeordnet ist.

## Claims

1. Ship coupling (1) for connecting two ship hulls, in particular a pushing vehicle and a pushed vehicle, comprising a coupling rod (6) with a coupling element (11) and a hydraulic cylinder (2) with a piston rod (5) guided in the hydraulic cylinder (2), wherein the piston rod (5) and the coupling rod (6) are connected to each other,
**characterized in**
**that** the hydraulic cylinder (2) is mounted, in an axially movable manner, in a housing (4) connected to a ship hull, a prestressed elastic element (3) being disposed in the housing and pushing the hydraulic cylinder (2) in its axial direction against the housing (4) such that the restoring force of the prestressed elastic element (3) causes the hydraulic cylinder (2) to be stationarily held in the housing at normal load, and only at peak loads that are greater than the restoring force of the prestressed elastic element (3), it absorbs a part of the load.

2. Ship coupling (1) according to claim 1,
**characterized in**
**that** the housing (4) is pivoted about a horizontal axis.

3. Ship coupling (1) according to claim 1 or 2,
**characterized in**
**that** the elastic element (3) pushes the hydraulic cylinder (2) into the direction facing away from the coupling rod (6) or in a direction towards the coupling rod (6).

4. Ship coupling (1) according to one of claims 1, 2 or 3,
**characterized in**
**that** the elastic element (3) exerts a force of 5·10⁵ N or more onto the hydraulic cylinder (2).

5. Ship coupling (1) according to one of claims 1 to 4,
**characterized in**
**that** the piston rod (5) and the coupling rod (6) are connected to each other via a connecting element (7) which is firmly connected with the piston rod (5) and grips around a flange collar (8) of the coupling rod (6) such that the coupling rod (6) is rotatably received by the connecting element (7).

6. Ship coupling (1) according to one of claims 1 to 5,
**characterized in**
**that** the coupling rod (6) is mounted in at least one first bearing (25) which prevents movements of the coupling rod (6) in a non-axial direction.

7. Ship coupling (1) according to claim 6,
**characterized in**
**that** the first bearing (25) consists, at least at the surface facing the coupling rod (6), of bronze, or that the first bearing (25) completely consists of bronze.

8. Ship coupling (1) according to one of claims 1 to 7,
**characterized in**
**that** the housing (4) is connected to the ship hull via at least one second bearing (17, 18).

9. Ship coupling (1) according to claim 8,
**characterized in**
**that** the second bearing (17, 18) consists, at least at the surface facing the housing (4), of bronze, or that the second bearing (17, 18) completely consists of bronze.

10. Ship coupling (1) according to one of claims 1 to 9,
**characterized in**
**that** the ship coupling (1) comprises a shock-absorbing device (20) comprising a basic body (21), at least one contact element (23) with a contact surface facing an adjacent ship hull, and at least one non-metallic absorbing element (22), wherein the absorbing element (22) is disposed between the basic body (21) and the contact element (23), and the basic body (21) is firmly connected with a ship hull.

11. Ship coupling (1) according to claim 10,
**characterized in**
**that** the absorbing element (22) consists of an elastic material, and/or that the absorbing element (22) consists of rubber or a plastic.

12. Ship coupling (1) according to one or several ones of claims 10 to 11,
**characterized in**
**that** the contact element (23) and/or the basic body (21) consist(s) of a metal.

13. Ship coupling (1) according to one or several ones of claims 10 to 12,
**characterized in**
**that** the contact element (23) is connected to the basic body (21) via an axially guided pin (26) such that the contact element (23) is movable relative to the basic body (21).

14. Ship coupling (1) according to claim 13,
**characterized in**
**that** the pin (26) is at one end firmly connected with the contact element (23) and at the other end comprises a pin head, wherein the pin (26) is mounted in a hole of the basic body (21) the cross-sectional area of which is larger than the cross-sectional area of the hole.

15. Ship coupling (1) according to one or several ones of claims 10 to 14,
**characterized in**
**that** the basic body (21) has an opening (26) in which the coupling rod (6) is guided, and/or that the first bearing (25) is disposed in the opening (24) of the basic body (21).

## Revendications

1. Accouplement de bateau (1) destiné à raccorder deux coques, en particulier d'un véhicule pousseur et d'un véhicule poussé, comprenant une tringle d'accouplement (6) dotée d'un élément de raccordement (11) et un cylindre hydraulique (2) doté d'une tige de piston (5), laquelle est guidée dans le cylindre hydraulique (2), dans lequel la tige de piston (5) et la tringle d'accouplement (6) sont raccordées l'une à l'autre,
**caractérisé en ce**
**que** le cylindre hydraulique (2) est disposé de façon axialement mobile dans un boîtier (4) raccordé de façon immobile à une coque, à l'intérieur duquel un élément élastique prétendu (3) est agencé, **en ce que** le cylindre hydraulique (2) appuie contre le boîtier (4) dans sa direction axiale, de sort que la force de rappel de l'élément élastique prétendu (3) s'exerce, **en ce que** le cylindre hydraulique (2) est maintenu fixement dans le boîtier lorsque la charge est normale et que l'élément élastique prétendu (3) ne reçoit une partie de la charge qu'en cas de pointes de charges supérieures à la force de rappel de celui-ci.

2. Accouplement de bateau (1) selon la revendication 1,
**caractérisé en ce**
**que** le boîtier (4) est disposé en pivotement autour d'un axe horizontal.

3. Accouplement de bateau (1) selon la revendication 1 ou 2,
**caractérisé en ce**
**que** l'élément élastique (3) appuie sur le cylindre hydraulique (2) dans la direction se détournant de la tringle d'accouplement (6) ou en direction de la tringle d'accouplement (6).

4. Accouplement de bateau (1) selon l'une des revendications 1, 2 ou 3,
**caractérisé en ce**
**que** l'élément élastique (3) exerce sur le cylindre hydraulique (2) une force de 5·10⁵ N ou plus.

5. Accouplement de bateau (1) selon l'une des revendications 1 à 4,
**caractérisé en ce**
**que** la tige de piston (5) et la tringle d'accouplement (6) sont raccordées l'une à l'autre par un élément de raccordement (7), lequel est relié fixement à la tige de piston (5) et entoure un col de bride (8) de la tringle d'accouplement (6), de sorte que la tringle d'accouplement (6) est reçue par l'élément de raccordement (7) de manière rotative.

6. Accouplement de bateau (1) selon l'une des revendications 1 à 5,
**caractérisé en ce**
**que** la tringle d'accouplement (6) est posée dans au moins un premier palier (25), lequel empêche les mouvements de la tringle d'accouplement (6) dans la direction non-axiale.

7. Accouplement de bateau (1) selon la revendication 6,
**caractérisé en ce**
**que** le premier palier (25) est constitué de bronze au moins sur la surface tournée vers la tringle d'accouplement (6), ou **en ce que** le premier palier (25) est constitué entièrement de bronze.

8. Accouplement de bateau (1) selon l'une des revendications 1 à 7,
**caractérisé en ce**
**que** le boîtier (4) est raccordé à la coque par au moins un deuxième palier (17, 18).

9. Accouplement de bateau (1) selon la revendication 8,
**caractérisé en ce**
**que** le deuxième palier (17, 18) est constitué de bronze au moins sur la surface tournée vers le boîtier (4), ou **en ce que** le deuxième palier (17, 18) est constitué entièrement de bronze.

10. Accouplement de bateau (1) selon l'une des revendications 1 à 9,
**caractérisé en ce**
**que** l'accouplement de bateau (1) comprend un dispositif d'absorption des chocs (20), lequel comprend un corps de base (21), au moins un élément de contact (23) doté d'une surface de contact tournée vers une coque adjacente et au moins un élément amortisseur non-métallique (22),
dans lequel l'élément amortisseur (22) est agencé entre le corps de base (21) et l'élément de contact (23), et le corps de base (21) est raccordé fixement à une coque.

11. Accouplement de bateau (1) selon la revendication 10,
**caractérisé en ce**
**que** l'élément amortisseur (22) est constitué d'un matériau élastique, et/ou **en ce que** l'élément amortisseur (22) est constitué de caoutchouc ou d'un plastique.

12. Accouplement de bateau (1) selon l'une ou plusieurs des revendications 10 à 11,
**caractérisé en ce**
**que** l'élément de contact (23) et/ou le corps de base (21) est constitué d'un métal.

13. Accouplement de bateau (1) selon l'une ou plusieurs des revendications 10 à 12,
**caractérisé en ce**
**que** l'élément de contact (23) est raccordé au corps de base (21) par le biais d'un boulon (26) guidé axialement, de telle sorte que l'élément de contact (23) est mobile par rapport au corps de base (21).

14. Accouplement de bateau (1) selon la revendication 13,
**caractérisé en ce**
**que** le boulon (26) est raccordé fixement, à une extrémité, à l'élément de contact (23) et, à l'autre extrémité, comporte une tête de boulon, dans lequel le boulon (26) est disposé dans une perforation du corps de base (21), sa section transversale étant supérieure à la section transversale de la perforation.

15. Accouplement de bateau (1) selon l'une ou plusieurs des revendications 10 à 14,
**caractérisé en ce**
**que** le corps de base (21) comporte une ouverture (26), à l'intérieur de laquelle la tringle d'accouplement (6) est guidée, et/ou le premier palier (25) est agencé dans l'ouverture (24) du corps de base (21).
